# EUROPÄISCHE PATENTSCHRIFT

(11) **EP 4 366 276 B1**
(45) Veröffentlichungstag und Bekanntmachung des Hinweises auf die Patenterteilung: **01.04.2026**
(21) Anmeldenummer: 23206485.7
(22) Anmeldetag: 27.10.2023
(51) Int. Cl.: H04L 67/12, H04L 12/403

(54) **MODULARES KOMMUNIKATIONSSYSTEM UND VERFAHREN ZUM BETREIBEN DES KOMMUNIKATIONSSYSTEMS**
MODULAR COMMUNICATION SYSTEM AND METHOD FOR OPERATING THE COMMUNICATION SYSTEM
SYSTÈME DE COMMUNICATION MODULAIRE ET PROCÉDÉ DE FONCTIONNEMENT DU SYSTÈME DE COMMUNICATION

(30) Priorität: 04.11.2022 EP 22205641
(43) Veröffentlichungstag der Anmeldung: 08.05.2024
(73) Patentinhaber: Murrelektronik GmbH, 71570 Oppenweiler (DE)
(72) Erfinder: Lentmaier, Steffen, 71570 Oppenweiler (DE); Wolff, Ingo, 71570 Oppenweiler (DE); Baier, Bastian, 71570 Oppenweiler (DE)
(74) Vertreter: Prinz & Partner mbB

(56) Entgegenhaltungen:
- DE-A1- 102018 104 171
- US-A1- 2006 274 746
- US-A1- 2008 082 178
- US-A1- 2012 236 873
- RIETMANN STEFAN ET AL: "Fieldbus Communication Scheme for Modular Converter Systems - Considerations for Minimal Switching Period and Low Data Latency", 2022 IEEE ENERGY CONVERSION CONGRESS AND EXPOSITION (ECCE), IEEE, 9 October 2022 (2022-10-09), pages 1 - 8, XP034234598, DOI: 10.1109/ECCE50734.2022.9947450

## Beschreibung

Die Erfindung betrifft ein modulares Kommunikationssystem. Ferner betrifft die Erfindung ein Summenrahmenverfahren zum Betreiben des Kommunikationssystems.

In zahlreichen Industrieanlagen und Maschinen werden Sensoren zum Einsammeln von Signalen genutzt und Aktoren um bestimmte Funktionen zu aktivieren. Die Maschinen dehnen sich dabei im dreidimensionalen Raum aus, weshalb die Sensoren und/oder Aktoren typischerweise im Raum verteilt angeordnet sind.

Bei vergleichsweise kompakten Maschinen hat sich eine sternförmige Anordnung der Sensoren und/oder Aktoren (Sterntopologie) als besonders nützlich und effektiv erwiesen. Insbesondere können Sensoren und/oder Aktoren sternförmig mit einem Sammelpunkt, beispielsweise einem IO-Link Hub, verbunden sein. Über Feldbusmodule und Switche können weitere Zweige des Sterns ausgebildet werden und weitere Sensoren und/oder Aktoren mit einem zentralen Sammelpunkt verbunden sein, beispielsweise mit einer Mastereinheit.

Diese Art von Maschinen zeichnet sich dadurch aus, dass an einzelnen Punkten oft mehrere Signale gleichzeitig Anliegen und vergleichsweise wenige Verbindungen bzw. Datenleitungen benötigt werden, um Datensignale zu übertragen.

Hingegen bilden z.B. intralogistische Anlagen, insbesondere Förderanlagen, meist eine Linie ab, wobei an einzelnen in einer Kette angeordneten Punkten nur wenige Signale verarbeitet werden müssen. Bedingt durch die auch in diesen Anlagen zumeist verwendete Sternanordnung von Sensoren und/oder Aktoren ist es häufig nötig, mehrere Leitungen parallel zu legen, um Datensignale zwischen den Sammelpunkten und den Sensoren und/oder Aktoren übertragen zu können. Dies führt wiederum dazu, dass sehr viele und vor allem lange Leitungen benötigt werden. Die Installation ist daher oft komplex, teuer und fehleranfällig.

Aus dem Stand der Technik sind zahlreiche unterschiedliche Kommunikationssysteme und Kommunikationsverfahren bekannt.

Die US 2006/274746 A1 offenbart eine Vorrichtung und Verfahren zur kombinierten Übertragung von Ein- sowie Ausgabedaten in Automatisierungsbussystemen.

Aus der US 2012/236873 A1 ist ein Verfahren zur Echtzeit-Datenübertragung in einem Kommunikationsnetzwerk bekannt.

Die US 2008/082178 A1 offenbart ein Verfahren zum Betreiben eines Feldbus-Netzwerksystems mit Ringtopologie.

Darüber hinaus ist aus der Messeveröffentlichung von RIETMANN STEFAN ET AL. "Fieldbus Communication Scheme for Modular Converter Systems - Considerations for Minimal Switching Period and Low Data Latency", 2022 IEEE ENERGY CONVERSION CONGRESS AND EXPOSITION (ECCE) vom 09. Oktober 2022 (2022-10-09), Seiten 1-8, XP034234598, DOI: 10.1109/ECCE50734.2022.9947450 ein Feldbus-Kommunikationsschema für ein modulares Konvertersystem bekannt.

Diese genannten Verfahren und Systeme können die oben beschriebenen Nachteile jedoch nicht vollständig überwinden.

Die Aufgabe der Erfindung ist es daher, diese aus dem Stand der Technik bekannten Nachteile in einfacher und kostengünstiger Weise zu beheben.

Die Aufgabe wird erfindungsgemäß gelöst durch ein modulares Kommunikationssystem gemäß des Patentanspruches 1 zum Anschließen an eine Mastereinheit. Das modulare Kommunikationssystem weist ein dezentral ausgebildetes Gerät auf. Das Gerät umfasst zumindest ein erstes Modul und ein zweites Modul, wobei das erste Modul dazu ausgebildet und eingerichtet ist, direkt mit der Mastereinheit verbunden zu werden. Das zweite Modul ist direkt mit dem ersten Modul verbunden und dazu ausgebildet und eingerichtet, indirekt über das erste Modul mit der Mastereinheit verbunden zu werden. Das erste Modul ist ferner dazu ausgebildet und eingerichtet, ein Datensignal von der Mastereinheit zu empfangen, welches zumindest einen ersten Datensatz umfasst, der durch das erste Modul nutzbar ist, und welches zumindest einen zweiten Datensatz umfasst, der durch das zweite Modul nutzbar ist.

Der Grundgedanke der Erfindung ist es, Module gleicher oder ähnlicher Funktion zu einem Gerät zu verbinden und so ein modulares und über den Raum verteiltes Gerät zu schaffen.

Technologisch stellt dabei das erste Modul eine Schnittstelle zur Mastereinheit dar. Die folgenden Module tauschen ihre Daten mit dem jeweils davorliegenden Modul aus, also beispielsweise das zweite Modul mit dem ersten Modul. Das davorliegende Modul kann dabei dasjenige sein, welches einen Schritt (Knoten) näher in Richtung zur Mastereinheit ist. Das davorliegende Modul ist also direkt (über eine Kommunikationsleitung) mit dem entsprechenden Modul verbunden. Die resultierende physikalische Topologie kann hierbei insbesondere eine Punkt-zu-Punkt Struktur sein.

Dadurch, dass das Datensignal mehrere Datensätze umfasst, können diese innerhalb des Geräts von Modul zu Modul weitergegeben werden, bis sie an das dafür vorgesehene Modul gelangen. Lange und insbesondere parallel liegende Datenleitungen werden hierfür nicht benötigt.

Selbstverständlich ist auch eine Kommunikation in umgekehrter Richtung, also eine Weitergabe von Datensätzen bzw. Datensignalen von einem Modul zum davorliegenden Modul und/oder zur Mastereinheit, möglich.

Das verteilte Gerät kann modular erweiterbar sein, indem zumindest ein weiteres Modul dem Kommunikationssystem hinzugefügt wird. Das hinzugefügte Modul kann mit dem zweiten Modul verbunden werden.

Es kann aber auch vorgesehen sein, dass das dritte Modul mit dem ersten Modul verbunden ist, sodass sich ausgehend vom ersten Modul beispielsweise zwei Kommunikationsstränge ausbilden, deren Anfangspunkte das zweite Modul bzw. das dritte Modul sind, die beide mit dem ersten Modul verbunden sind. An das zweite Modul und/oder das dritte Modul können sich wiederum weitere Module anschließen. In diesem Fall kann das dritte Modul auch als zweites zweite Modul bezeichnet werden.

Das erste Modul ist dazu ausgebildet und eingerichtet, das von der Mastereinheit empfangene Datensignal zu nutzen und zu verändern, um ein verändertes Datensignal an das zweite Modul weiterzuleiten. Beispielsweise kann das erste Modul den ersten Datensatz nutzen und aus dem Datensignal entfernen, wodurch ein verändertes Datensignal entsteht, welches eine geringere Datenmenge umfasst. Durch diese Maßnahme kann beispielsweise die an das zweite Modul zu übertragende Datenmenge reduziert werden.

In einer bevorzugten Ausführungsform ist das Kommunikationssystem als IO-Link Kommunikationssystem ausgebildet, wobei die Mastereinheit ein IO-Link-Master ist und wobei das Gerät ein IO-Link-Gerät ist. Die Ausgestaltung als IO-Link Kommunikationssystem ermöglicht eine nahtlose und standardisierte Kommunikation zwischen den Modulen und der Mastereinheit, wobei die Mastereinheit auch die Stromversorgung der Module übernehmen kann. Darüber hinaus ermöglicht es der Einsatz der IO-Link Technologie, die Module technisch einfach zu konfigurieren und/oder auszutauschen.

Es kann auch vorgesehen sein, dass die Module so voneinander beabstandet angeordnet sind, dass sie eine Kette bilden, die sich über einen Raum erstreckt. Dadurch kann das Kommunikationssystem mit vergleichsweise geringem Installations- und Materialaufwand in große und/oder langgestreckte Industrieanlagen wie Förderanlagen und/oder Werkshallen integriert werden.

Ein weiterer Aspekt der Erfindung sieht vor, dass das erste und das zweite Modul baugleich sind. Dies ermöglicht eine besonders einfache Installation und verringert die Fehleranfälligkeit des Kommunikationssystems.

Weiterhin ist denkbar, dass das Kommunikationssystem ein drittes Modul, das Teil des dezentral ausgebildeten Geräts ist, aufweist. Das dritte Modul ist direkt mit dem zweiten Modul und indirekt über das zweite Modul mit dem ersten Modul und der Mastereinheit verbunden. Selbstverständlich können auch mehr als drei Module vorgesehen sein. Je nach Einsatzzweck kann das Kommunikationssystem so technisch einfach erweitert und exakt an die jeweiligen Anforderungen angepasst werden.

In einer weiteren Variante sind die Module des Kommunikationssystems jeweils durch Punkt-zu-Punkt-Verbindungen miteinander verbunden. Insbesondere kann das erste Modul dazu ausgebildet und eingerichtet sein, mit der Mastereinheit ebenfalls über eine Punkt-zu-Punkt-Verbindungen verbunden zu werden.

Für die Kommunikation über die Punkt-zu-Punkt-Verbindungen eignen sich insbesondere Punkt-zu-Punkt-Kommunikationsstandards, wie RS232, RS42, UART, LVDS, Modulierte Kommunikation (FSK, ASK, PSK, und abgeleitete Verfahren), USB und/oder Bus-Kommunikationsstandards, wie I²C I I²S, LIN, RS485 und CAN (Selbstverständlich ist diese Aufzählung nicht einschränkend zu verstehen).

Es kann vorgesehen sein, dass zwei oder mehr der Verbindungen auf unterschiedlichen Kommunikationsstandards basieren.

Unter dem Begriff "unterschiedliche Kommunikationsstandards" kann dabei auch verstanden werden, dass die gleiche Kommunikationsphysik (beispielsweise eine gleiche Spannung) genutzt wird, jedoch abgeänderte und/oder eingeschränkte Protokolle zum Kommunizieren genutzt werden.

Hierdurch können beispielsweise nachfolgende Module günstiger gestaltet werden, insbesondere, wenn diese keine IO-Link Technologie enthalten.

Insbesondere können für die Kommunikation zwischen der Mastereinheit und dem ersten Modul umfangreichere Protokolle vorgesehen werden, als zur Kommunikation zwischen den einzelnen Modulen.

Beispielsweise können für die Kommunikation zwischen der Mastereinheit und dem ersten Modul IO-Link Protokolle genutzt werden. Gleichzeitig kann die Kommunikation zwischen den einzelnen Modulen auf anderen Protokollen basieren, die zwar auf die IO-Link Physik zurückgreifen, bei denen jedoch eine geringere Datenmenge übertragen wird. Dadurch kann die Datenverarbeitungs-und/oder Datenübertragungsgeschwindigkeit insgesamt erhöht werden.

Auch die Nutzung eigens für die Anwendung erstellter und/oder proprietärer Protokolle ist in diesem Zusammenhang denkbar.

Insbesondere kann das Kommunikationssystem die Mastereinheit umfassen.

In einer bevorzugten Ausführungsvariante ist das erste Modul ein Gateway, welches eine Verbindung des dezentralen Geräts zur Mastereinheit herstellt. Insbesondere ist es denkbar, dass das erste Modul ein Gateway zwischen einem IO-Link-System und einem proprietären System ist, beispielsweise dem dezentralen Gerät.

Vorzugsweise ist das erste Modul dabei so ausgebildet und eingerichtet, dass die Mastereinheit bei einer Kommunikation mit dem dezentralen Gerät ausschließlich das erste Modul erkennt und/oder ausschließlich mit dem ersten Modul direkt kommuniziert.

In diesem Zusammenhang kann vorgesehen sein, dass das Gateway Daten auf einer anwendungsorientierten Schicht des OSI-Referenzmodells ("Open Systems Interconnection" - OSI) interpretiert und/oder verändert, insbesondere auf Schicht 6 ("Presentation Layer") und/oder Schicht 7 ("Application Layer"). Dadurch kann eine zu übertragende Datenmenge reduziert werden, was Ressourcen einspart.

Das erste Modul ist dazu ausgebildet und eingerichtet, Nutzdaten, die von der Mastereinheit an das erste Modul übertragen werden, auszuwerten, zu interpretieren, neu zusammenzustellen und anschließend an ein Folgemodul, insbesondere das zweite Modul, weiterzuleiten. Selbstverständlich ist diese Art der Kommunikation auch in umgekehrter Richtung möglich, also vom dezentralen Gerät zur Mastereinheit. Auch in diesem Fall werden Nutzdaten durch das erste Modul ausgewertet, interpretiert und neu zusammengestellt, bevor sie an die Mastereinheit weitergeleitet werden.

Die folgenden Module können nach dem gleichen Prinzip agieren oder andere abweichende Kommunikationsmechanismen verwenden.

Es erfolgt also im Gegensatz zu klassischen Feldbussen nicht nur ein Weiterleiten (Routing) der Nutzdaten, sondern eine Auswertung, Interpretation und Zusammenstellen, also ein Verändern.

Nutzdaten der Schicht(en) 6 und/oder 7 des OSI-Referenzmodells werden vor dem Weiterleiten durch das erste Modul interpretiert und manipuliert, insbesondere also verändert.

In diesem Zusammenhang ist auch denkbar, dass das erste Modul dazu ausgebildet und eingerichtet ist, Daten von den Folgemodulen zusammenzustellen und dem Master als Datenrahmen (Frame) zu übergeben. Der Datenrahmen kann dabei insbesondere auch eine andere Länge aufweisen als weitere Datenrahmen, die zur Kommunikation zwischen dem ersten Modul und den Folgemodulen genutzt werden. Von den Folgemodulen an das erste Modul weitergeleitete Datenrahmen können durch das erste Modul interpretiert und die Daten zu einem neuen Datenrahmen zusammengesetzt werden, der dann an die Mastereinheit weitergeleitet wird.

Vorzugsweise sind das erste Modul und das zweite Modul dazu ausgebildet und eingerichtet, Nutzdaten mit einer Größe von weniger als einem Byte an das jeweils andere Modul zu senden bzw. vom anderen Modul zu empfangen.

Insbesondere kann vorgesehen sein, dass das erste Modul und/oder das zweite Modul dazu ausgebildet und eingerichtet sind bzw. ist, Nutzdaten mit einer Größe von 1 Bit einzusammeln, zu generieren, auszugeben und/oder weiterzuleiten, also insbesondere kleine Datenmengen. Die Nutzdaten können auch eine Größe von 2 Bit oder mehr haben, bspw. bis zu 96 Byte.

So können im Vergleich zu konventionellen Feldbussystemen und/oder konventionellen I/O-Link-Systemen, bei denen typischerweise mindestens 3 Byte Nutzdaten ausgetauscht werden, Ressourcen eingespart werden.

Insofern ist erfindungsgemäß unter anderem vorgesehen, dass auch Nutzdaten mit einer Größe von weniger als 3 Byte pro Modul ausgetauscht werden. Mit anderen Worten ist für das einzelne Modul vorgesehen, dass die Nutzdaten des entsprechenden Moduls eine Größe von weniger als 3 Byte haben. Anders ausgedrückt kann das erste Modul, das zweite Modul und weitere Module jeweils Nutzdaten mit einer Größe von weniger als 3 Byte bereitstellen, insbesondere dem ersten Modul, welches mit der Mastereinheit verbindbar ist. Der Datenrahmen für die Mastereinheit kann dann wieder (zumindest) 3 Byte betragen.

Es kann ferner vorgesehen sein, dass das erste Modul zusätzliche digitale und/oder analoge Eingänge und/oder Ausgänge zum Erfassen von Daten aufweist. Das erste Modul kann also ein Gateway sein, der zusätzliche Funktionen von Feldbuskomponenten integriert.

Beispielsweise kann das erste Modul als eine Leuchte oder als ein Ventilblock ausgebildet sein, der entsprechende Leuchtendaten bzw. Ventilblockdaten erfasst. Das erste Modul kann diese Daten zusammen mit weiteren Daten von Folgemodulen sammeln, manipulieren und anschließend an die Mastereinheit weiterleiten.

Ferner wird die Aufgabe erfindungsgemäß gelöst durch ein Summenrahmenverfahren gemäß Patentanspruch 13, insbesondere zum Betreiben eines erfindungsgemäßen Kommunikationssystems, umfassend die Schritte:
- Senden von einem Datensignal von der Mastereinheit an das erste Modul, wobei das Datensignal zumindest einen ersten Datensatz zum Betreiben des ersten Moduls und einen zweiten Datensatz zum Betreiben des zweiten Moduls umfasst;
- Nutzen des ersten Datensatzes zum Betreiben des ersten Moduls;
- Verändern des Datensignals, indem zumindest der erste Datensatz aus dem Datensignal entfernt wird und Nutzdaten, die von der Mastereinheit an das erste Modul übertragen worden sind, ausgewertet, interpretiert und neu zusammengestellt werden, sodass ein verändertes Datensignal erhalten wird,
- Senden des veränderten Datensignals vom ersten Modul an das zweite Modul;
- Empfangen des veränderten Datensignals durch das zweite Modul, und
- Nutzen des zweiten Datensatzes zum Betreiben des zweiten Moduls.

Beim Summenrahmenverfahren werden mit dem Datensignal alle Datensätze vom Master zunächst an das erste Modul gesendet. Das erste Modul nimmt den, für sich bestimmten Datensatz heraus und sendet die restlichen Datensätze weiter an das zweite Modul. Dieser Vorgang wird mit den entsprechenden nachgeordneten Modulen so lange wiederholt, bis jedes Modul den vorgesehenen Datensatz erhalten hat.

Sofern ausgehend vom ersten Modul zwei Kommunikationsstränge vorliegen, kann das erste Modul das Datensignal so verändern, dass das veränderte Datensignal nur vom vorgesehenen der beiden Kommunikationsstränge weiterverarbeitet wird.

Selbstverständlich funktioniert das Verfahren auch in der umgekehrten Richtung, also von den Modulen zum Master. Dazu sendet das letzte Modul seine Daten bzw. einen Datensatz in Form eines Datensignals zu dem vorhergehenden Modul. Dieses wiederum reichert das Datensignal mit seinen eigenen Daten an und gibt es an das wiederum vorhergehende Modul weiter. Der Vorgang wird so lange wiederholt, bis das Datensignal die Mastereinheit erreicht.

Daneben ist auch ein Blockrahmenverfahren denkbar, insbesondere zum Betreiben eines erfindungsgemäßen Kommunikationssystems, umfassend die Schritte:
- Senden von einem Datensignal von der Mastereinheit an das erste Modul, wobei das Datensignal zumindest einen ersten Datensatz zum Betreiben des ersten Moduls und einen zweiten Datensatz zum Betreiben des zweiten Moduls umfasst;
- Nutzen des ersten Datensatzes zum Betreiben des ersten Moduls;
- Senden des Datensignals vom ersten Modul an das zweite Modul;
- Empfangen des Datensignals durch das zweite Modul, und
- Nutzen des zweiten Datensatzes zum Betreiben des zweiten Moduls.

Im Gegensatz zum Summenrahmenverfahren wird das Datensignal zwischen den Modulen unverändert weitergeleitet. Vorteilhaft an diesem Verfahren ist, dass mehrere Module auf die gleichen Daten zugreifen können. Dies verringert insbesondere die Fehleranfälligkeit bei der Datenübertragung.

Ferner ist auch ein Indexverfahren denkbar, insbesondere zum Betreiben eines erfindungsgemäßen Kommunikationssystems, umfassend die Schritte:
- Kennzeichnen eines Datensatzes mit einem Index;
- Senden eines Datensignals, das den Datensatz mit dem Index umfasst, von der Mastereinheit an das erste Modul;
- Vergleichen des Index mit einem Vergleichswert durch das erste Modul;
- Nutzen des Datensatzes durch das erste Modul, sofern der Index mit dem Vergleichswert übereinstimmt, oder Verändern des Index und Weiterleiten eines veränderten Datensignals, das den Datensatz umfasst, an das zweite Modul, sofern der Index nicht mit dem Vergleichswert übereinstimmt.

Für das Indexverfahren gibt es zwei grundsätzliche Ansätze.

Eine Anfrage durch den Master kann einerseits durch die Module gereicht und von dem Zielmodul beantwortet werden, wobei der Index nach dem oben beschriebenen Verfahren manipuliert wird.

Andererseits kann vorgesehen sein, dass im ersten Modul immer die Indizes aller Module zur Verfügung stehen. Ändert sich der Inhalt eines Index, wird ein Austausch angestoßen. Hierdurch verkürzt sich die Antwortzeit an den Master.

Das Indexverfahren eignet sich beim Kommunikationssystem, insbesondere dem als IO-Link ausgebildeten Kommunikationssystem, besonders gut für die Übertragung azyklischer Daten, insbesondere von Daten, die nur bei nur bei Bedarf und/oder beim Eintritt bestimmter Ereignisse übertragen werden.

Die Vorteile und Eigenschaften, die zum Kommunikationssystem diskutiert wurden, gelten selbstverständlich auch für die Verfahren in entsprechender Weise.

Weitere Merkmale und Vorteile der Erfindung ergeben sich aus der nachfolgenden Beschreibung sowie aus den Zeichnungen, auf die Bezug genommen wird. In den Zeichnungen zeigen:
- Fig. 1 eine schematische Darstellung einer aus dem Stand der Technik bekannten Anordnung von Sensoren und Aktoren in einer Industrieanlage;
- Fig. 2 eine schematische Darstellung eines erfindungsgemäßen Kommunikationssystems;
- Fig. 3 eine schematische Darstellung eines erfindungsgemäßen Summenrahmenverfahrens;
- Fig. 4 eine schematische Darstellung eines Blockrahmenverfahrens; und
- Fig. 5 eine schematische Darstellung eines Indexverfahrens.

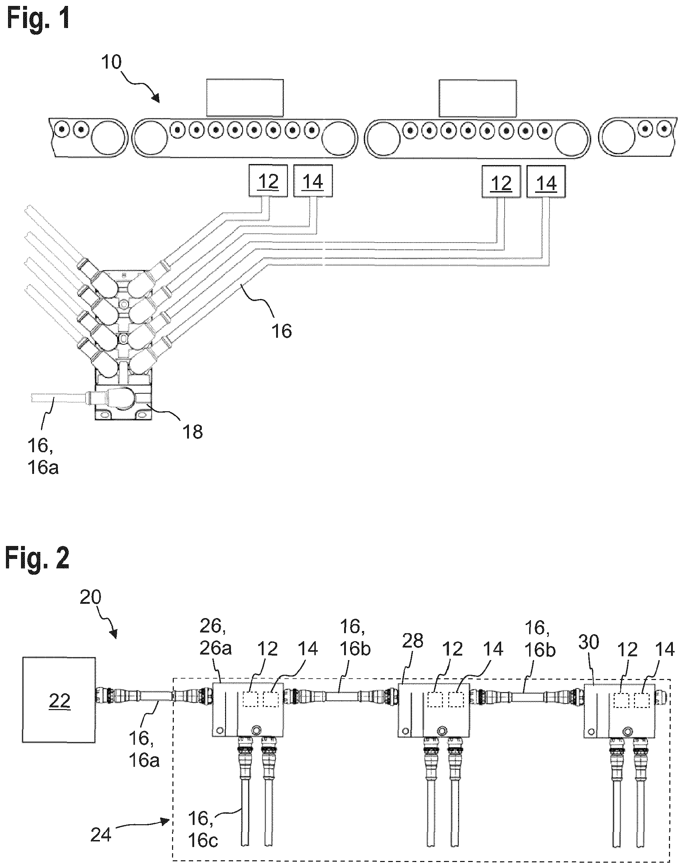

Figur 1 zeigt eine schematische Darstellung einer Industrieanlage 10, die als Fördersystem ausgebildet ist und sich langgezogen über einen Raum erstreckt. Entlang der Industrieanlage 10 sind eine Mehrzahl von Sensoren 12 und Aktoren 14 angeordnet, welche der Überwachung und Steuerung der Industrieanlage 10 dienen.

Die Sensoren 12 und Aktoren 14 sind auf konventionelle Weise über Verbindungen 16 sternförmig mit einem Sammelpunkt 18, beispielsweise einem Hub, verbunden. Der Hub kann wiederum zusammen mit weiteren Hubs und/oder weiteren Sensoren 12 und/oder Aktoren 14 sternförmig mit weiteren Sammelpunkten 18, beispielsweise einer Mastereinheit (nicht gezeigt), verbunden sein. Die Verbindung 16 zur Mastereinheit wird in nachfolgenden Beispielen vereinfachen als Masterverbindung 16a bezeichnet.

Wie in Figur 1 zu erkennen, müssen zur Realisierung der konventionellen sternförmigen Topologie eine Vielzahl von Verbindungen 16 parallel angeordnet werden, um sämtliche Sensoren 12 und Aktoren 14 mit dem Sammelpunkt 18 zu verbinden. Mit anderen Worten ist eine komplizierte und kostenintensive Verkabelung notwendig.

Figur 2 zeigt zum Vergleich eine schematische Darstellung eines erfindungsgemäßen modularen Kommunikationssystems 20, welches insbesondere für den Einsatz in Industrieanlagen 10, wie der in Figur 1 dargestellten Industrieanlage, geeignet ist.

Das Kommunikationssystem 20 weist eine Mastereinheit 22 und ein dezentral ausgebildetes Gerät 24 auf.

Das dezentral ausgebildete Gerät 24 umfasst im Ausführungsbeispiel ein erstes Modul 26, ein baugleiches zweites Modul 28 und ein baugleiches drittes Modul 30.

Selbstverständlich ist dies nicht einschränkend zu verstehen. Insbesondere kann das dezentrale Gerät 24 auch mehr als drei Module 26, 28, 30 umfassen.

Die Module 26, 28, 30 sind im Ausführungsbeispiel so voneinander beabstandet angeordnet, dass sie eine Kette bilden, die sich über einen Raum erstreckt, beispielsweise entlang einer Industrieanlage 10, wie der in Figur 1 gezeigten.

Das erste Modul 26 ist dabei direkt mit der Mastereinheit 22 verbunden. Das zweite Modul 28 ist direkt mit dem ersten Modul 26 und indirekt über das erste Modul 26 mit der Mastereinheit 22 verbunden. Das dritte Modul 30 ist direkt mit dem zweiten Modul 28 und indirekt über das zweite Modul 28 und das erste Modul 26 mit der Mastereinheit 22 verbunden.

Im Ausführungsbeispiel sind die Verbindungen 16 zwischen den Modulen 26, 28, 30 (nachfolgend als Modulverbindungen 16b bezeichnet) als Punkt-zu-Punkt-Verbindungen 16 ausgebildet. Die Verbindung 16 vom dezentralen Gerät 24 zur Mastereinheit 22 (also die Masterverbindung 16a) ist in gleicher Weise ausgebildet. Die Modulverbindungen 16b sowie die Masterverbindung 16a sind im Ausführungsbeispiel durch mindestens dreiadrige Kabel realisiert, insbesondere durch vieradrige oder fünfadrige Kabel.

Die Modulverbindungen 16b können dabei auf unterschiedlichen Kommunikationsstandards basieren. Insbesondere ist denkbar, dass einzelne Modulverbindungen 16b auf Funk- und/oder WLAN-Technologie und/oder IO-Link Wireless basieren, während andere Modulverbindungen 16b durch Standardsensorkabel realisiert sind.

Im Ausführungsbeispiel ist das Kommunikationssystem 20 als IO-Link Kommunikationssystem ausgebildet. Die Mastereinheit 22 ist ein IO-Link-Master und das dezentrale Gerät 24 ein IO-Link-Gerät.

Für die Kommunikation über die Masterverbindung 16a zwischen der Mastereinheit 22 und dem ersten Modul 26 werden IO-Link Standardprotokolle genutzt. Die Kommunikation zwischen den einzelnen Modulen 26, 28, 30 basiert dagegen auf Protokollen, die zwar auf die IO-Link Physik zurückgreifen, bei denen jedoch im Vergleich zu den Standardprotokollen eine geringere Datenmenge übertragen wird.

Selbstverständlich ist dies nicht einschränkend zu verstehen. Auch eine auf IO-Link Standardprotokollen basierende Kommunikation zwischen den einzelnen Modulen 26, 28, 30 ist möglich.

Im Ausführungsbeispiel ist das erste Modul 26 ein Gateway 26a und stellt die Masterverbindung 16a des dezentralen Geräts 24 zur Mastereinheit 22 her. Das erste Modul 26 ist also ein Gateway 26a zwischen einem IO-Link-Master und einem proprietären System (dem dezentralen Gerät 24).

Dabei ist das erste Modul 26 so ausgebildet und eingerichtet, dass die Mastereinheit 22 bei einer Kommunikation mit dem dezentralen Gerät 24 ausschließlich mit dem ersten Modul 26 direkt kommuniziert.

Das Gateway 26a ist dazu ausgebildet und eingerichtet, von der Mastereinheit 22 kommende Daten auf einer anwendungsorientierten Schicht des OSI-Referenzmodells, insbesondere auf Schicht 6 ("Presentation Layer") und/oder Schicht 7 ("Application Layer") zu interpretieren und zu verändern und daraus resultierende veränderte Daten an das dezentralen Gerät 24 weiterzuleiten. Auch in umgekehrter Richtung, also vom dezentralen Gerät 24 zur Mastereinheit 22, kann das Gateway 26a Daten auf einer anwendungsorientierten Schicht des OSI-Referenzmodells, insbesondere auf Schicht 6 und/oder Schicht 7 vor dem Weiterleiten interpretieren und verändern.

Bei den Daten handelt es sich im Ausführungsbeispiel um Nutzdaten ("Payload").

Das erste Modul 26 ist also dazu ausgebildet und eingerichtet, Nutzdaten, die von der Mastereinheit 22 an das erste Modul 26 übertragen werden, auszuwerten, zu interpretieren, neu zusammenzustellen und anschließend an ein Folgemodul, insbesondere das zweite Modul 28, weiterzuleiten. Die entsprechenden Nutzdaten werden also nicht nur einfach weitergeleitet, sondern zumindest ausgewertet, interpretiert und neu zusammengestellt, bevor sie an das Folgemodul weitergeleitet werden.

Wie bereits erläutert, ist diese Art der Kommunikation auch in umgekehrter Richtung möglich, also vom dezentralen Gerät 24 zur Mastereinheit 22. Auch in diesem Fall werden Nutzdaten durch das erste Modul 26 ausgewertet, interpretiert und neu zusammengestellt, bevor sie an die Mastereinheit 22 weitergeleitet werden.

Optional können auch das zweite Module 28 und das dritte Modul 30 nach dem gleichen Prinzip agieren. Auch sie können Nutzdaten interpretieren und manipulieren, insbesondere auf den Schichten 6 und 7 des OSI-Referenzmodells.

Im Ausführungsbeispiel ist das erste Modul 26 ferner dazu ausgebildet und eingerichtet, Nutzdaten von den Folgemodulen zusammenzustellen und der Mastereinheit 22 als Datenrahmen (Frame) zu übergeben. Auch zur Kommunikation zwischen dem ersten Modul 26, dem zweiten Modul 28 und dem dritten Modul 30 werden Datenrahmen genutzt. Diese weisen jedoch eine geringere Länge auf, als der zur Kommunikation zwischen der Mastereinheit 22 und dem ersten Modul 26 genutzte Datenrahmen.

Im Ausführungsbeispiel werden also von den Folgemodulen an das erste Modul 26 weitergeleitete Datenrahmen durch das erste Modul 26 interpretiert und die Daten zu einem neuen Datenrahmen zusammengesetzt, der dann an die Mastereinheit 22 weitergeleitet wird.

Besonders an dem Ausführungsbeispiel ist auch, dass das erste Modul 26, das zweite Modul 28 und das dritte Modul 30 jeweils dazu ausgebildet und eingerichtet sind, Nutzdaten mit einer Größe von 1 Bit bis zu 96 Byte zu generieren, einzusammeln, auszugeben und/oder weiterzuleiten. Dies ermöglicht eine sehr ressourcenschonende Kommunikation und entsprechend schlanke Hardwareauslegung.

Die Module 26, 28, 30 können jeweils selbst Sensoren 12 und/oder Aktoren 14 umfassen.

Alternativ oder zusätzlich können weitere Sensoren 12 und/oder Aktoren 14 mit den jeweiligen Modulen 26, 28, 30 verbunden werden, beispielsweise über die in Figur 2 am unteren Ende der Abbildung gezeigten Verbindungen 16 (nachfolgend als Sensor- und/oder Aktorverbindungen 16c bezeichnet). Die Sensor- und/oder Aktorverbindungen 16c sind im Ausführungsbeispiel durch mindestens zweiadrige Kabel realisiert. Das erste Modul 26 ist im Ausführungsbeispiel also ein Gateway 26a, der zusätzliche Funktionen zum Erfassen von Daten aufweist.

Insbesondere ist denkbar, dass für die Kommunikation über die Sensor-und/oder Aktorverbindungen 16c, die Modulverbindungen 16b und die Masterverbindung 16a jeweils unterschiedliche Kommunikationsstandards bzw. Protokolle genutzt werden.

Alternativ oder zusätzlich kann das erste Modul 26, das zweite Modul 28 und/oder das dritte Modul 30 selbst ein Sensor 12 und/oder Aktor 14 sein. Beispielsweise können die Module 26, 28, 30 jeweils als Industrieleuchten ausgebildet sein. Die Module 26, 28, 30 können jeweils Daten erfassen, empfangen und/oder verändern und basierend auf diesen Daten beispielsweise Lichtsignale aussenden.

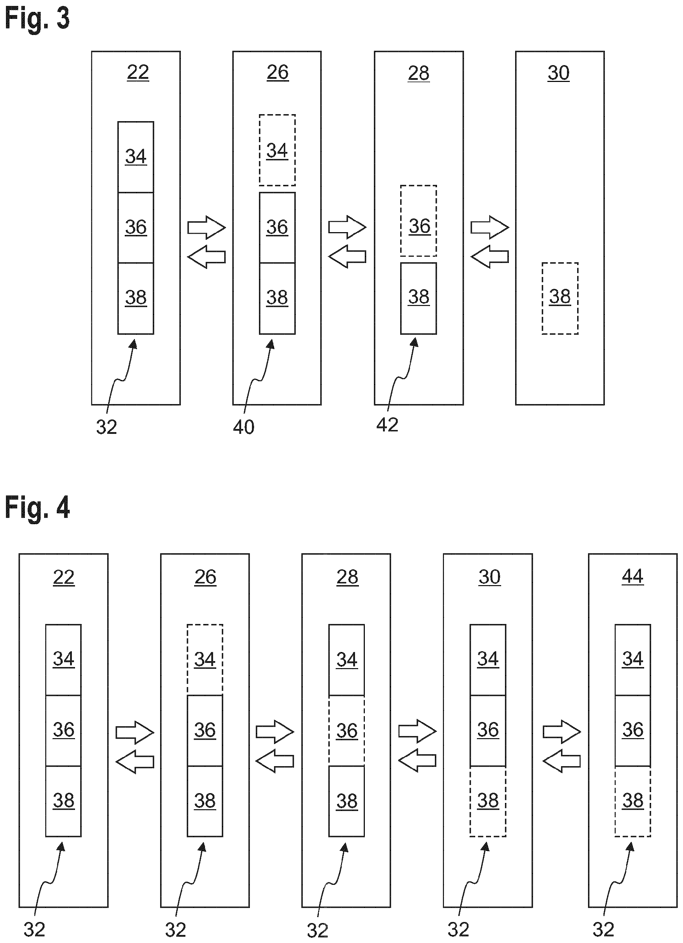

Die Mastereinheit 22 ist, wie in Figur 3 schematisch skizziert, dazu ausgebildet und eingerichtet, ein Datensignal 32 an das erste Modul 26 zu übermitteln. Das erste Modul 26 ist dazu ausgebildet und eingerichtet, das Datensignal 32 zu empfangen. Das Datensignal 32 umfasst einen ersten Datensatz 34, der durch das erste Modul 26 nutzbar ist, einen zweiten Datensatz 36, der durch das zweite Modul 28 nutzbar ist und einen dritten Datensatz 38, der durch das dritte Modul 30 nutzbar ist. Bei den Datensätzen 34, 36, 38 kann es sich beispielsweise um Befehle zum Betreiben der Aktoren 14 oder zum Auslesen von Sensordaten handeln.

Das erste Modul 26 ist dazu ausgebildet und eingerichtet, das von der Mastereinheit 22 empfangene Datensignal 32 zu nutzen, so zu verändern, dass ein verändertes Datensignal 40 entsteht, und dieses anschließend an das zweite Modul 28 weiterzuleiten.

Das zweite Modul 28 ist dazu ausgebildet und eingerichtet, das vom ersten Modul 26 empfangene veränderte Datensignal 40 zu nutzen, nochmals zu verändern und anschließend an das dritte Modul 30 weiterzuleiten.

Ferner sind die Module 26, 28, 30 jeweils dazu ausgebildet und eingerichtet, Datensignale 32, 40 mit Datensätzen 34, 36, 38 auch in die umgekehrte Richtung, also zur Mastereinheit 22 hin, zu empfangen, zu nutzen, zu verändern und weiterzuleiten.

Das Kommunikationssystems 20 kann dabei zum Zwecke der Datenübertragung mit einem oder mehreren verschiedenen Verfahren betrieben werden.

Im Folgenden werden diese anhand von Ausführungsbeispielen kurz erläutert.

Figur 3 zeigt eine schematische Darstellung eines erfindungsgemäßen Summenrahmenverfahrens zum Betreiben des Kommunikationssystems 20.

In einem ersten Schritt des Verfahrens sendet die Mastereinheit 22 an das erste Modul 26 ein Datensignal 32. Dieses umfasst einen ersten Datensatz 34 zum Betreiben des ersten Moduls 26, einen zweiten Datensatz 36 zum Betreiben des zweiten Moduls 28 und einen dritten Datensatz 38 zum Betreiben des dritten Moduls 30.

In einem zweiten Schritt nutzt das erste Modul 26 den ersten Datensatz 34, beispielsweise um einen Aktor 14 zu betreiben.

In einem dritten Schritt des Verfahrens verändert das erste Modul 26 das Datensignal 32. Im Ausführungsbeispiel löscht es den ersten Datensatz 34 aus dem Datensignal 32, sodass ein verändertes Datensignal 40 entsteht, welches nur noch den zweiten und den dritten Datensatz 36, 38 enthält.

Dadurch kann im darauffolgenden vierten Schritt, beim Senden des veränderten Datensignals 40 vom ersten Modul 26 an das zweite Modul 28, die zu übertragende Datenmenge reduziert werden.

In einem fünften Schritt empfängt das zweite Modul 28 das veränderte Datensignal 40.

In einem sechsten Schritt nutzt das zweite Modul 28 dann den zweiten Datensatz 36 zu Betriebszwecken.

In weiteren anschließenden Verfahrensschritten kann das zweite Modul 28 das veränderte Datensignal 40 nochmals verändern, beispielsweise durch Löschen des zweiten Datensatzes 36, sodass ein nochmals geändertes Datensignal 42 entsteht.

Das nochmals geänderte Datensignal 42 kann dann an das dritte Modul 30 weitergeleitet und von diesem zum Betrieb genutzt werden.

Selbstverständlich ist das Verfahren auch zum Betreiben von Kommunikationssystemen 20 mit einer Vielzahl weiterer Module geeignet.

Zu dem funktioniert das Verfahren auch in umgekehrter Richtung.

Dazu überträgt beispielsweise das dritte Modul 30 ein Datensignal 32 mit einem dritten Datensatz 38 (in diesem Beispiel bezieht sich die Bezeichnung "dritter Datensatz" darauf, dass der Datensatz vom dritten Modul 30 stammt), der beispielsweise Sensordaten des dritten Moduls 30 enthalten kann, an das zweite Modul 28. Das zweite Modul 28 reichert das Datensignal 32 mit einem zweiten Datensatz 36 an und leitet es an das erste Modul 26 weiter. Dieses kann wiederum einen weiteren (ersten) Datensatz 34 hinzugeben und die gesammelten Datensätze 34, 36, 38 an die Mastereinheit 22 weiterleiten.

Figur 4 zeigt eine schematische Darstellung eines Blockrahmenverfahren, das alternativ oder zusätzlich zum Summenrahmenverfahren zum Betreiben des Kommunikationssystems 20 genutzt werden kann.

Im Ausführungsbeispiel entsprechen die ersten beiden Verfahrensschritte des Blockrahmenverfahren denen des Summenrahmenverfahrens.

Im Gegensatz zum Summenrahmenverfahren sendet das erste Modul 26 das Datensignal 32 in einem dritten Verfahrensschritt jedoch unverändert an das zweite Modul 28 weiter.

In einem vierten Verfahrensschritt des Blockrahmenverfahrens empfängt das zweite Modul 28 das Datensignal 32.

In einem fünften Verfahrensschritt nutzt das zweite Modul 28 dann den zweiten Datensatz 36 zu Betriebszwecken.

In weiteren anschließenden Verfahrensschritten kann das zweite Modul 28 das Datensignal 32 an das dritte Modul 30 weiterleiten. Der dritte Datensatz 38 kann dann vom dritten Modul 30 zum Betrieb genutzt werden.

Selbstverständlich kann das Verfahren auch zum Betreiben von modularen Kommunikationssystemen 20 mit mehr als drei Modulen 26, 28, 30 genutzt werden.

Beispielsweise ist denkbar, dass ein viertes Modul 44 vorgesehen ist, welches baugleich dem dritten Modul 30 ist und/oder für die gleiche Funktion vorgesehen ist und/oder ein Funktionszwilling zum dritten Modul 30 bildet und welches mit demselben Datensatz (dem dritten Datensatz 38) betrieben werden kann.

In diesem Fall kann das dritte Modul 30 das Datensignal 32 an das vierte Modul 44 weiterleiten.

Das vierte Modul 44 empfängt das Datensignal 32 und nutzt den dritten Datensatz 38 für seinen Betrieb.

Selbstverständlich können auch alle Module des dezentral ausgebildeten Geräts 24 baugleich sein.

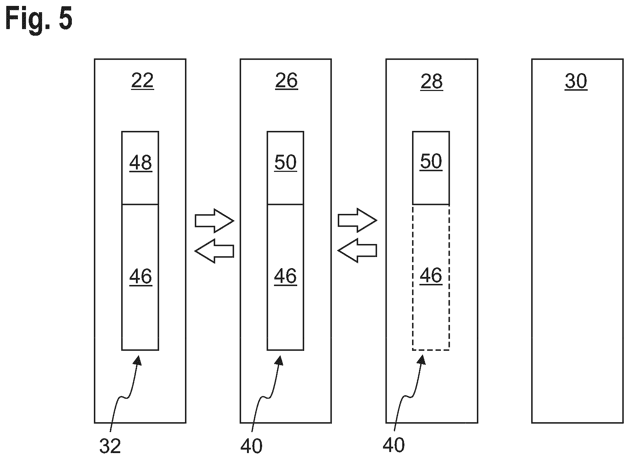

Figur 5 zeigt eine schematische Darstellung eines Indexverfahrens, das alternativ oder zusätzlich zum Summenrahmenverfahren und/oder Blockrahmenverfahren zum Betreiben des Kommunikationssystems 20 genutzt werden kann.

In einem ersten Verfahrensschritt des Indexverfahrens kennzeichnet die Mastereinheit 22 einen bestimmten Datensatz 46 mit einem Index 48.

Beispielsweise kann der bestimmte Datensatz 46 zum Betreiben des zweiten Moduls 28 bestimmt sein. Im Ausführungsbeispiel vergibt die Mastereinheit 22 daher den Index 48 mit dem Wert "2".

In einem zweiten Verfahrensschritt sendet die Mastereinheit 22 ein Datensignal 32, welches den bestimmten Datensatz 46 mit dem Index 48 umfasst, an das erste Modul 26.

In einem dritten Verfahrensschritt vergleicht das erste Modul 26 den Index 48 mit einem Vergleichswert. Der Vergleichswert kann beispielsweise "1" betragen.

Da der Vergleich im Ausführungsbeispiel ergibt, dass der Index 48 (Wert "2") größer als der Vergleichswert "1" ist, verändert das erste Modul 26 in einem vierten Verfahrensschritt den Index 48, sodass ein veränderter Index 50 entsteht. Dies kann beispielsweise durch Subtraktion des Vergleichswertes vom Index 48 geschehen. Der Wert des veränderten Index 50 beträgt dann im Ausführungsbeispiel "1".

In einem fünften Verfahrensschritt leitet das erste Modul 26 dann ein verändertes Datensignal 40, umfassend den bestimmten Datensatz 46 und den veränderten Index 50, an das zweite Modul 28 weiter.

Das zweite Modul 28 vergleicht den Wert des veränderten Index 50 mit dem Vergleichswert. Da sowohl der Wert des veränderten Index 50 als auch der Vergleichswert "1" betragen und somit übereinstimmen, nutzt das zweite Modul 28 den bestimmten Datensatz 46 zum Betrieb.

Die Datenübertragung in umgekehrter Richtung (zur Mastereinheit 22 hin) funktioniert auf umgekehrte Weise. Ein Modul 28 sendet einen bestimmten Datensatz 46 mit einem Index 48 an das vorangehende Modul 26. Dieses erhöht den Index 48 um den Vergleichswert und sendet den bestimmten Datensatz 46 mit dem veränderten Index 50 entsprechend weiter. Das erste Modul 26 stellt die Informationen dann der Mastereinheit 22 zur Verfügung.

Grundsätzlich ist das modulare Kommunikationssystem 20 modular erweiterbar, sodass weitere Module eingebunden werden können.

## Patentansprüche

1. Modulares Kommunikationssystem zum Anschließen an eine Mastereinheit (22), aufweisend ein dezentral ausgebildetes Gerät (24), das zumindest ein erstes Modul (26) und ein zweites Modul (28) umfasst, wobei das erste Modul (26) dazu ausgebildet und eingerichtet ist, direkt mit der Mastereinheit (22) verbunden zu werden, und wobei das zweite Modul (28) direkt mit dem ersten Modul (26) verbunden ist und dazu ausgebildet und eingerichtet ist, indirekt über das erste Modul (26) mit der Mastereinheit (22) verbunden zu werden, wobei das erste Modul (26) ferner dazu ausgebildet und eingerichtet ist, ein Datensignal (32) von der Mastereinheit (22) zu empfangen, welches zumindest einen ersten Datensatz (34) umfasst, der durch das erste Modul (26) nutzbar ist, und welches zumindest einen zweiten Datensatz (36) umfasst, der durch das zweite Modul (28) nutzbar ist, wobei das erste Modul (26) dazu ausgebildet und eingerichtet ist, das von der Mastereinheit (22) empfangene Datensignal (32) zu nutzen und zu verändern, indem Nutzdaten ausgewertet, interpretiert und neu zusammenzustellt werden, um ein verändertes Datensignal (40) an das zweite Modul (28) weiterzuleiten, und wobei das erste Modul (26) dazu ausgebildet und eingerichtet ist, ein vom zweiten Modul (28) empfangenes Datensignal (32) zu nutzen und zu verändern, indem Nutzdaten ausgewertet, interpretiert und neu zusammenzustellt werden, um ein verändertes Datensignal (40) an die Mastereinheit (22) weiterzuleiten.

2. Kommunikationssystem nach Anspruch 1, wobei die Module (26, 28, 30) so voneinander beabstandet angeordnet sind, dass sie eine Kette bilden, die sich über einen Raum erstreckt.

3. Kommunikationssystem nach Anspruch 1 oder 2, wobei das erste und das zweite Modul (26, 28) baugleich sind.

4. Kommunikationssystem nach einem der vorhergehenden Ansprüche, aufweisend ein drittes Modul (30), das Teil des dezentral ausgebildeten Geräts (24) ist, wobei das dritte Modul (30) direkt mit dem zweiten Modul (28) verbunden ist und indirekt über das zweite Modul (28) mit dem ersten Modul (26) verbunden ist.

5. Kommunikationssystem nach einem der vorhergehenden Ansprüche, wobei die Module (26, 28, 30) jeweils durch Punkt-zu-Punkt-Verbindungen (16) miteinander verbunden sind, insbesondere wobei das erste Modul (26) dazu ausgebildet und eingerichtet ist, mit der Mastereinheit (22) durch eine Punkt-zu-Punkt-Verbindung (16) verbunden zu werden, und wobei zumindest zwei der Verbindungen (16) auf unterschiedlichen Kommunikationsstandards basieren.

6. Kommunikationssystem nach einem der vorhergehenden Ansprüche, wobei das erste Modul (26) dazu ausgebildet und eingerichtet ist, Daten von dem zweiten Modul (28) zusammenzustellen und an die Mastereinheit (22) als Datenrahmen zu übergeben.

7. Kommunikationssystem nach Anspruch 6, wobei das erste Modul (26) dazu ausgebildet und eingerichtet ist, einen vom zweiten Modul (28) weitergeleiteten Datenrahmen zu interpretieren und zu einem neuen Datenrahmen zusammenzusetzen, der an die Mastereinheit (22) weitergeleitet wird.

8. Kommunikationssystem nach Anspruch 7, wobei der neu zusammengesetzte Datenrahmen, der an die Mastereinheit (22) weitergeleitet wird, eine andere Länge aufweist als weitere Datenrahmen, die zur Kommunikation zwischen dem ersten Modul (26) und zweiten Modul (28) genutzt werden.

9. Kommunikationssystem nach einem der vorhergehenden Ansprüche, wobei das erste Modul (26) so ausgebildet und eingerichtet ist, dass die Mastereinheit (22) bei einer Kommunikation mit dem dezentralen Gerät (24) ausschließlich mit dem ersten Modul (26) direkt kommuniziert.

10. Kommunikationssystem nach einem der vorhergehenden Ansprüche, wobei das erste Modul (26) ein Gateway (26a) ist, welches eine Verbindung des dezentralen Geräts (24) zur Mastereinheit (22) herstellt.

11. Kommunikationssystem nach einem der vorhergehenden Ansprüche, wobei die Nutzdaten der Schicht 6 und/oder der Schicht 7 des OSI-Referenzmodells angehören.

12. Kommunikationssystem nach einem der vorhergehenden Ansprüche, wobei das erste Modul (26) und das zweite Modul (28) dazu ausgebildet und eingerichtet sind, Nutzdaten mit einer Größe von weniger als 3 Byte an das jeweils andere Modul (26, 28) zu senden bzw. vom anderen Modul (26, 28) zu empfangen.

13. Summenrahmenverfahren, insbesondere zum Betreiben eines Kommunikationssystems (20) gemäß einem der vorhergehenden Ansprüche, umfassend die Schritte:
- Senden von einem Datensignal (32) von der Mastereinheit (22) an das erste Modul (26), wobei das Datensignal (32) zumindest einen ersten Datensatz (34) zum Betreiben des ersten Moduls (26) und einen zweiten Datensatz (36) zum Betreiben des zweiten Moduls (28) umfasst;
- Nutzen des ersten Datensatzes (34) zum Betreiben des ersten Moduls (26);
- Verändern des Datensignals (32), indem zumindest der erste Datensatz (34) aus dem Datensignal (32) entfernt wird und Nutzdaten, die von der Mastereinheit (22) an das erste Modul (26) übertragen worden sind, ausgewertet, interpretiert und neu zusammengestellt werden, sodass ein verändertes Datensignal (40) erhalten wird,
- Senden des veränderten Datensignals (40) vom ersten Modul (26) an das zweite Modul (28);
- Empfangen des veränderten Datensignals (40) durch das zweite Modul (28), und
- Nutzen des zweiten Datensatzes (36) zum Betreiben des zweiten Moduls (28).

14. Summenrahmenverfahren nach Anspruch 13, wobei das erste Modul (26) die Nutzdaten an das zweite Modul (28) als Datenrahmen übergibt, der eine geringere Länge als ein Datenrahmen aufweist, der zur Kommunikation zwischen der Mastereinheit (22) und dem ersten Modul (26) genutzt wird.

15. Summenrahmenverfahren nach Anspruch 13 oder 14, wobei das erste Modul (26) Nutzdaten mit einer Größe von weniger als 3 Byte an das zweite Modul (28) sendet.

## Claims

1. A modular communication system for connection to a master unit (22), comprising a device (24) that is configured in a decentralized manner and includes at least a first module (26) and a second module (28), wherein the first module (26) is configured and set up to be directly connected to the master unit (22), and wherein the second module (28) is directly connected to the first module (26) and is configured and set up to be indirectly connected to the master unit (22) via the first module (26), wherein the first module (26) is further configured and set up to receive from the master unit (22) a data signal (32) which comprises at least a first data set (34) usable by the first module (26) and which comprises at least a second data set (36) usable by the second module (28), wherein the first module (26) is configured and set up to use and modify the data signal (32) received from the master unit (22) in that user data is evaluated, interpreted, and recompiled in order to forward a modified data signal (40) to the second module (28), and wherein the first module (26) is configured and set up to use and modify a data signal (32) received from the second module (28) in that user data is evaluated, interpreted, and recompiled in order to forward a modified data signal (40) to the master unit (22).

2. The communication system according to claim 1, wherein the modules (26, 28, 30) are arranged to be spaced apart from each other so as to form a chain extending across a space.

3. The communication system according to claim 1 or 2, wherein the first and the second module (26, 28) are structurally identical.

4. The communication system according to any of the preceding claims, comprising a third module (30) which is part of the device (24) configured in a decentralized manner, wherein the third module (30) is directly connected to the second module (28) and is indirectly connected to the first module (26) via the second module (28).

5. The communication system according to any of the preceding claims, wherein the modules (26, 28, 30) are each interconnected by point-to-point connections (16), in particular wherein the first module (26) is configured and set up to be connected to the master unit (22) by a point-to-point connection (16), and wherein at least two of the connections (16) are based on different communication standards.

6. The communication system according to any of the preceding claims, wherein the first module (26) is configured and set up to compile data from the second module (28) and transfer it to the master unit (22) as a data frame.

7. The communication system according to claim 6, wherein the first module (26) is configured and set up to interpret a data frame forwarded by the second module (28) and to assemble it to a new data frame which is forwarded to the master unit (22).

8. The communication system according to claim 7, wherein the newly assembled data frame that is forwarded to the master unit (22) has a different length than further data frames that are used for communication between the first module (26) and the second module (28).

9. The communication system according to any of the preceding claims, wherein the first module (26) is configured and set up such that when communicating with the decentralized device (24), the master unit (22) exclusively communicates directly with the first module (26).

10. The communication system according to any of the preceding claims, wherein the first module (26) is a gateway (26a) which establishes a connection of the decentralized device (24) to the master unit (22).

11. The communication system according to any of the preceding claims, wherein the user data is part of layer 6 and/or layer 7 of the OSI reference model.

12. The communication system according to any of the preceding claims, wherein the first module (26) and the second module (28) are configured and set up to send user data having a size of less than 3 bytes to the respectively other module (26, 28) or to receive user data having a size of less than 3 bytes from the other module (26, 28).

13. A summation frame method, in particular for operating a communication system (20) according to any of the preceding claims, comprising the steps of:
- sending a data signal (32) from the master unit (22) to the first module (26), wherein the data signal (32) comprises at least a first data set (34) for operating the first module (26) and a second data set (36) for operating the second module (28);
- using the first data set (34) for operating the first module (26);
- modifying the data signal (32) by removing at least the first data set (34) from the data signal (32) and evaluating, interpreting, and recompiling user data that has been transferred by the master unit (22) to the first module (26) so that a modified data signal (40) is obtained;
- sending the modified data signal (40) from the first module (26) to the second module (28);
- receiving the modified data signal (40) by the second module (28); and
- using the second data set (36) for operating the second module (28).

14. The summation frame method according to claim 13, wherein the first module (26) transfers the user data to the second module (28) as a data frame that has a shorter length than a data frame used for communication between the master unit (22) and the first module (26).

15. The summation frame method according to claim 13 or 14, wherein the first module (26) sends user data having a size of less than 3 bytes to the second module (28).

## Revendications

1. Système de communication modulaire pour le raccordement à une unité maître (22), comprenant un dispositif (24) réalisé de manière décentralisée qui comprend au moins un premier module (26) et un deuxième module (28), le premier module (26) étant réalisé et configuré de manière à être relié directement à l'unité maître (22), et le deuxième module (28) étant relié directement au premier module (26) et étant réalisé et configuré de manière à être relié indirectement à l'unité maître (22) par l'intermédiaire du premier module (26), le premier module (26) étant en outre réalisé et configuré de manière à recevoir un signal de données (32) provenant de l'unité maître (22) qui comprend au moins un premier ensemble de données (34) utilisable par le premier module (26) et au moins un deuxième ensemble de données (36) utilisable par le deuxième module (28), le premier module (26) étant réalisé et configuré de manière à utiliser et modifier le signal de données (32) reçu de l'unité maître (22) en évaluant, interprétant et réorganisant des données utiles afin de transmettre un signal de données modifié (40) au deuxième module (28), et le premier module (26) étant réalisé et configuré de manière à utiliser et modifier un signal de données (32) reçu du deuxième module (28) en évaluant, interprétant et réorganisant des données utiles afin de transmettre un signal de données modifié (40) à l'unité maître (22).

2. Système de communication selon la revendication 1, les modules (26, 28, 30) étant espacés les uns des autres de manière à former une chaîne qui s'étend à travers un espace.

3. Système de communication selon la revendication 1 ou 2, le premier et le deuxième module (26, 28) étant de construction identique.

4. Système de communication selon l'une des revendications précédentes, comprenant un troisième module (30) qui fait partie du dispositif (24) réalisé de manière décentralisée, le troisième module (30) étant relié directement au deuxième module (28) et indirectement au premier module (26) par l'intermédiaire du deuxième module (28).

5. Système de communication selon l'une des revendications précédentes, les modules (26, 28, 30) étant respectivement reliés les uns aux autres par des liaisons point à point (16), le premier module (26) étant en particulier réalisé et configuré de manière à être relié à l'unité maître (22) par une liaison point à point (16), et au moins deux des liaisons (16) étant basées sur des standards de communication différents.

6. Système de communication selon l'une des revendications précédentes, le premier module (26) étant réalisé et configuré de manière à grouper des données provenant du deuxième module (28) et à les transmettre à l'unité maître (22) sous forme de trame de données.

7. Système de communication selon la revendication 6, le premier module (26) étant réalisé et configuré de manière à interpréter une trame de données transmise par le deuxième module (28) et à l'organiser en une nouvelle trame de données qui est transmise à l'unité maître (22).

8. Système de communication selon la revendication 7, la trame de données réorganisée qui est transmise à l'unité maître (22) présentant une longueur différente de celle d'autres trames de données utilisées pour la communication entre le premier module (26) et le deuxième module (28).

9. Système de communication selon l'une des revendications précédentes, le premier module (26) étant réalisé et configuré de telle sorte que, lors d'une communication avec le dispositif décentralisé (24), l'unité maître (22) communique directement et exclusivement avec le premier module (26).

10. Système de communication selon l'une des revendications précédentes, le premier module (26) étant une passerelle (26a) qui établit une liaison entre le dispositif décentralisé (24) et l'unité maître (22).

11. Système de communication selon l'une des revendications précédentes, les données utiles appartenant à la couche 6 et/ou à la couche 7 du modèle de référence OSI.

12. Système de communication selon l'une des revendications précédentes, le premier module (26) et le deuxième module (28) étant réalisés et configurés de manière à envoyer des données utiles d'une taille inférieure à 3 bytes à l'autre module (26, 28) respectif ou à les recevoir de l'autre module (26, 28).

13. Procédé à trame de somme, en particulier pour la mise en œuvre d'un système de communication (20) selon l'une des revendications précédentes, comprenant les étapes suivantes :
- l'envoi d'un signal de données (32) de l'unité maître (22) au premier module (26), le signal de données (32) comprenant au moins un premier ensemble de données (34) pour la mise en œuvre du premier module (26) et un deuxième ensemble de données (36) pour la mise en œuvre du deuxième module (28) ;
- l'utilisation du premier ensemble de données (34) pour la mise en œuvre du premier module (26) ;
- la modification du signal de données (32) en supprimant au moins le premier ensemble de données (34) du signal de données (32) et en évaluant, interprétant et réorganisant des données utiles qui ont été transmises de l'unité maître (22) au premier module (26) de manière à obtenir un signal de données modifié (40) ;
- l'envoi du signal de données modifié (40) du premier module (26) au deuxième module (28) ;
- la réception du signal de données modifié (40) par le deuxième module (28) ; et
- l'utilisation du deuxième ensemble de données (36) pour la mise en œuvre du deuxième module (28).

14. Procédé à trame somme selon la revendication 13, le premier module (26) transmettant les données utiles au deuxième module (28) sous forme de trame de données présentant une longueur inférieure à celle d'une trame de données utilisée pour la communication entre l'unité maître (22) et le premier module (26).

15. Procédé à trame somme selon la revendication 13 ou 14, le premier module (26) envoyant des données utiles d'une taille inférieure à 3 bytes au deuxième module (28).
